# EUROPÄISCHE PATENTSCHRIFT

(11) **EP 0 379 854 B1**
(45) Veröffentlichungstag und Bekanntmachung des Hinweises auf die Patenterteilung: **09.06.1993**
(21) Anmeldenummer: 89890315.8
(22) Anmeldetag: 13.12.1989
(51) Int. Cl.: B60C 11/06, B60C 11/12

(54) **Ganzjahres-Radialreifen**
All weather radial tyre
Bandage pneumatique toutes saisons

(30) Priorität: 27.01.1989 AT 162/89
(43) Veröffentlichungstag der Anmeldung: 01.08.1990
(73) Patentinhaber: Semperit Reifen Aktiengesellschaft, A-2514 Traiskirchen (AT)
(72) Erfinder: Loidl, Helmut, A-2393 Sparbach (AT); Petrascheck, Ernst, Dipl.-Ing., A-2340 Mödling (AT); Stelzer, Josef, A-1120 Wien (AT)
(74) Vertreter: Vinazzer, Edith

(56) Entgegenhaltungen:
- EP-A- 0 199 570
- EP-A- 0 282 252
- EP-A- 0 295 195
- FR-A- 2 155 739
- US-A- 4 736 783

## Beschreibung

Die Erfindung betrifft einen Ganzjahres-Radialreifen für LKW-Antriebsachsen mit einer Lauffläche, die ein entlang des Reifenäquators verlaufendes durch Umfangsnuten begrenztes Mittelband und breite, eine Blockstruktur erzeugende Quernuten in den Laufflächenseitenbereichen aufweist, wobei die Quernuten in die Laufflächenränder münden und in einem Scheitelbereich, neben den das Mittelband begrenzenden Umfangsnuten eine Vielzahl von in Querrichtung parallel bzw. im wesentlichen parallel zueinenander verlaufenden Feineinschnitten vorgesehen ist.

Ein derartiger LKW-Reifen ist aus der EP-A 0 199 570 bekannt. Das Laufflächenprofil dieses Reifens besteht aus zumindest zwei Umfangsnuten, die eine Aufteilung in Umfangsrippen oder Blockreihen bewirken. Jede Rippe oder jeder Block ist mit einer Vielzahl von Feineinschnitten versehen, die die Rippe bzw. den Block komplett durchqueren.

Ferner sind LKW-Antriebsachsreifen, die für den Ganzjahreseinsatz geeignet sind, in unterschiedlichen Ausführungsvarianten bekannt. Neben einer Vielzahl anderer Konstruktionsdetails kommt hiebei der Ausgestaltung des Laufflächenprofiles eine besondere Bedeutung zu. Ein für den Ganzjahreseinsatz geeigneter LKW-Reifen, der in unseren Breiten gefahren wird, sollte über eine gute Wintertauglichkeit auf schneeigem, nassem oder matschigem Grund verfügen. Im Vordergrund stehen hierbei gute Griffeigenschaften sowohl auf Neuschnee als auch auf festgefahrenem Schnee und ein möglichst kurzer Bremsweg auf einer nassen oder matschigen Fahrbahn. Daneben soll ein Antriebsachsreifen auch ein möglichst gleichmäßiges Abriebsverhalten, einen präzisen Geradeauslauf, eine gute Fahrstabilität und selbstverständlich auch eine hohe Kilometerleistung aufweisen. Es ist allgemein bekannt, daß gerade bei Antriebsachsreifen ein höherer Abrieb der Lauffläche im Scheitelbereich erfolgt. Um das Abriebsbild über die Gesamtbreite der Lauffläche möglichst gleichmäßig zu halten, ist es daher bei Antriebsachsreifen bekannt, im Scheitelbereich der Lauffläche ein oder zwei in Umfangsrichtung verlaufende Laufflächenbänder vorzusehen, die weiters keine nennenswerte Strukturierung, gegebenenfalls einige Feineinschnitte, aufweisen. In den Laufflächenseitenbereichen sind meist jeweils zwei in Umfangsrichtung verlaufende Blockreihen vorgesehen, wobei die Einzelblöcke durch ausgeprägte Quernuten voneinander getrennt sind. Bei fortschreitendem Abrieb ist bei diesen Blöcken das Auftreten einer sogenannten Sägezahnbildung unvermeidlich. Hierbei erfolgt an den Blockkanten, die beim Abrollen des Reifens zuerst in Kontakt mit dem Untergrund kommen, eine höhere Abnützung als an den zweiten Blockkanten. Die bekannten LKW-Antriebsachsreifen sind weiters nur bedingt wintertauglich. So ist insbesondere der Schneegriff als auch das Bremsverhalten auf Schneefahrbahn bzw. nasser oder matschiger Fahrbahn noch verbesserungswürdig.

Hier setzt nun die Erfindung ein, deren Aufgabe darin besteht, einen LKW-Reifen für Antriebsachsen so zu gestalten, daß er eine wesentlich bessere Wintertauglichkeit als die bekannten Antriebsachsreifen aufweist, wobei gleichzeitig eine Sägezahnbildung während des Abriebs in einem merklich geringeren Ausmaß auftreten soll.

Gelöst wird die gestellte Aufgabe erfindungsgemäß dadurch, daß der Scheitelbereich eine Breite von mindestens 30 % und höchstens 50 % der Laufflächenbreite und neben den das Mittelband begrenzenden Umfangsnuten nur Feineinschnitte aufweist, wobei Feineinschnitte aus dem Scheitelbereich die Seitenbereiche bis zu den Laufflächenrändern durchqueren und die im Scheitelberelch außerhalb des Mittelbandes verlaufenden Feineinschnitte gegensinnig zu den Feineinschnitten im Mittelband geneigt sind, und daß die in den beiden Seitenbereichen verlaufenden Quernuten laufflächeninnenseitig nicht in die Umfangsnuten einmünden.

Durch die erfindungsgemäßen Maßnahmen wird ein Antriebsachsreifen geschaffen, dessen Laufflächenprofil eine ausgezeichnete Wintertauglichkeit aufweist. Durch die Vielzahl von Feineinschnitten wird nicht nur die Traktion auf einer Schneefahrbahn, sondern auch das Bremsverhalten auf nasser oder schneeiger Fahrbahn weitgehend verbessert. Ein weiterer Vorteil dieser Maßnahmen besteht darin, daß eine Sägezahnbildung in einem nur mehr kaum merklichen Ausmaß auftritt, was insbesondere darauf zurückzuführen ist, daß durch die Vielzahl von Feineinschnitten eine größere Anzahl von "Block"-Kanten geschaffen wird.

Insbesondere beträgt weiters der Fahrflächenanteil im Scheitelbereich mindestens 80 %, vorzugsweise mindestens 90 %, was sich besonders günstig auf das Abriebsbild, über die Gesamtbreite der Lauffläche betrachtet, auswirkt.

Nach einem weiteren Merkmal der Erfindung sind die das Mittelband begrenzenden Umfangsnuten als schmale, in Umfangsrichtung verlaufende, gerade Umfangsnuten ausgebildet, deren Breite maximal 4 mm beträgt. Gegenüber herkömmlichen Reifen dieser Art, sind demnach die das Mittelband begrenzenden Umfangsnuten sehr schmal ausgebildet. Es hat sich jedoch herausgestellt, daß ein sehr präziser Geradeauslauf weiterhin gewährleistet ist.

Der Abstand zwischen einander benachbarten Feineinschnitten beträgt 12 bis 20 mm, bevorzugt 14 bis 18 mm.

Es ist von Vorteil, wenn im Mittelband zwischen den Umfangsnuten durchgehende Feineinschnitte angeordnet sind, welche vorzugsweise zum Reifenäquator unter einem Winkel von 45 bis 85° geneigt sind. Diese Maßnahme wirkt sich günstig auf das im Fahrbetrieb entstehende Reifengeräusch aus.

Es ist daher auch vorteilhaft, wenn die im Scheitelbereich außerhalb des Mittelbandes verlaufenden Feineinschnitte bzw. Feineinschnittabschnitte unter einem Winkel von 30 bis 85° zum Reifenäquator geneigt sind.

Bei einer bevorzugten Ausführungsform der Erfindung sind die im Mittelband verlaufenden Feineinschnitte zickzackförmig gestaltet. Der aus dieser Zickzackform resultierende Verzahnungseffekt wirkt sich günstig auf die Gesamtstabilität des Mittelbandes aus. Hierbei wird bevorzugt eine Ausgestaltung gewählt, bei der die im Mittelband verlaufenden Feineinschnitte aus jeweils drei Abschnitten bestehen, von welchen jeweils die in die Umfangsnuten einmündenden Abschnitte parallel zueinander verlaufen und den Neigungswinkel der Feineinschnnitte relativ zur Äquatorlinie bestimmen.

Es ist ein Vorteil, wenn die Quernuten zwei Abschnitte aufweisen, die einen stumpfen Winkel miteinander einschließen, wobei jeweils der in den Laufflächenrand mündende Abschnitt, der bevorzugt länger ausgeführt ist als der zweite Abschnitt, im wesentlichen in Querrichtung verläuft bzw. bis zu einem Winkel von 30° von dieser abweicht. Hierbei können auch die in die Laufflächenränder mündenden Abschnitte der Quernuten zickzackförmig gestaltet sein und die die Seitenbereiche durchquerenden Feineinschnitte gemäß der Zickzackform der Quernuten ausgebildet sein.

Für gute Griffeigenschaften ist es hierbei besonders günstig, wenn zwischen benachbarten Quernuten zumindest zwei Feineinschnitte verlaufen.

Die Breite sämtlicher Feineinschnitte wird hierbei ≦ 1,5 mm gewählt.

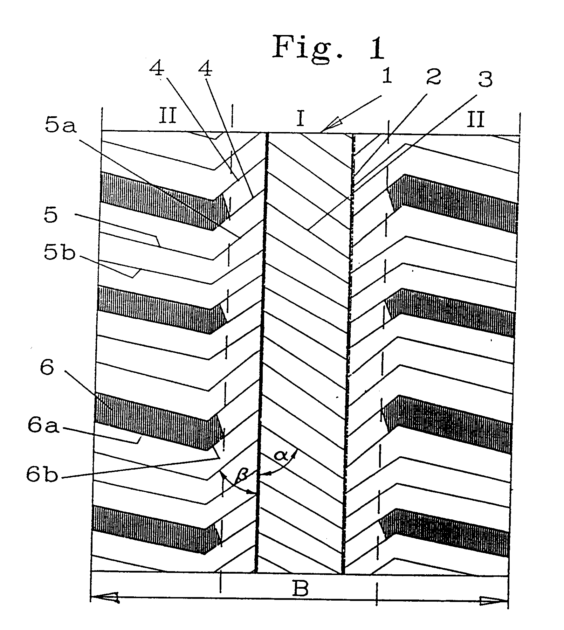

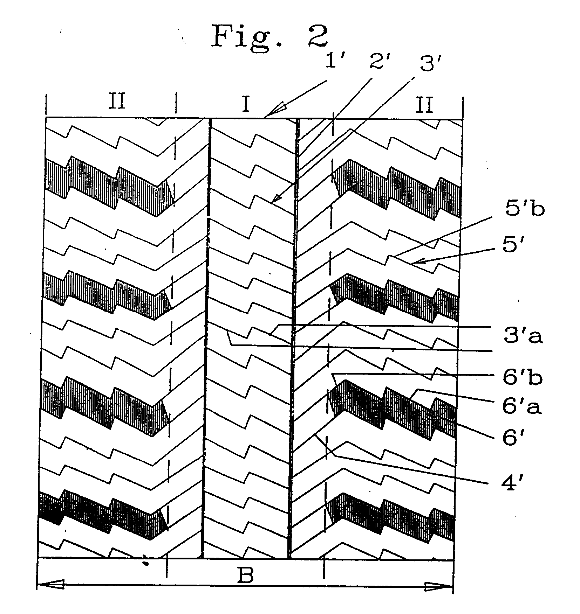

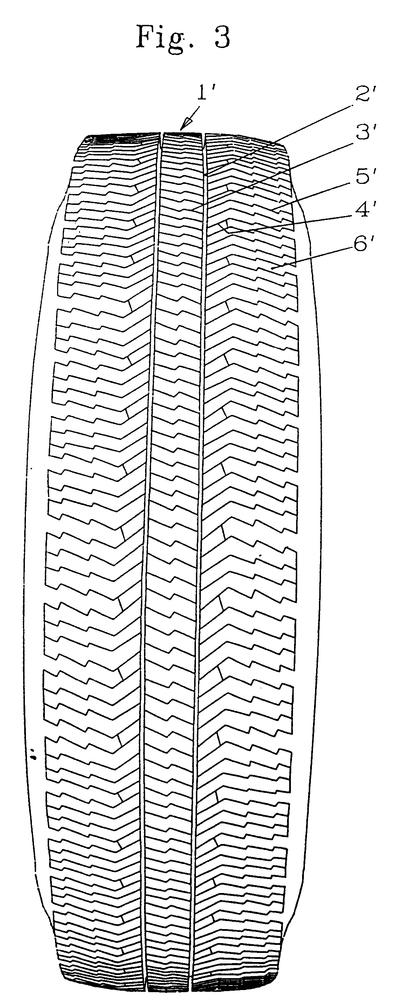

Weitere Merkmale, Vorteile und Einzelheiten der Erfindung werden nun anhand der Zeichnung, die zwei Ausführungsbeispiele darstellt, näher beschrieben. Hierbei zeigt Fig. 1 eine erste Ausführungsvariante, und zwar eine Draufsicht auf eine Teilabwicklung des Laufflächenprofiles, Fig. 2 ein zweites Ausführungsbeispiel in einer zu Fig. 1 analogen Darstellung und Fig. 3 einen Reifen mit einer gemäß Fig. 2 ausgestalteten Profilierung schematisch in Vorderansicht.

In den Zeichnungsfiguren 1 und 2 ist das Laufflächenprofil jeweils mit einer Breite B dargestellt, die der Breite des Reifens in der Bodenaufstandsfläche unter Nenndruck und Nennlast entspricht. Ein Scheitelbereich I, dessen Breite im vorliegenden Ausführungsbeispiel rund ein Drittel der Laufflächenbreite B beträgt, weist ein in Umfangsrichtung durchgehendes Mittelband 1 auf, welches seitlich durch je eine schmale, ca. 3 mm breite, und gerade verlaufende Umfangsnut 2 begrenzt ist. Im Mittelband 1 ist eine Vielzahl von Feineinschnitten 3 vorgesehen, die das Mittelband 1 über seine gesamte Breite durchsetzen, im wesentlichen prallel zueinander und gerade verlaufen, sowie gegenüber der Äquatorlinie des Reifens geneigt sind. Der Neigungswinkel α wird in einem Bereich zwischen 45 und 85° gewählt. Die Normalabstände benachbarter Feineinschnitte 3 sind, um das Laufgeräusch günstig zu beeinflussen, über den Reifenumfang gesehen, unterschiedlich gewählt. Die Abstände der Feineinschnitte 3 voneinander werden jedoch in einem Bereich zwischen 12 und 20 mm, insbesondere zwischen 14 und 18 mm, gewählt werden. Im Scheitelbereich I ist der Fahrflächenanteil (Anteil der Gesamtfläche, die beim Abrollen des Reifens mit dem Boden in Berührung kommt) größer als 80 %, vorzugsweise größer als 90 %.

In den seitlich des Mittelbandes 1 angeordneten Bereichen des Scheitelbereiches I verlaufen ebenfalls Feineinschnitte 4 bzw. Feineinschnittabschnitte 5a, die zur Äquatorlinie geneigt sind, parallel bzw. im wesentlichen parallel zueinander verlaufen und in die Umfangsnuten 2, jeweils im Bereich zwischen benachbarten Feineinschnitten 3 des Mittelbandes 1 einmünden. Die Feineinschnitte 4 und die Feineinschnittabschnitte 5a sind unter einem Winkel β von 30 bis 85° zur Äquatorlinie geneigt, wobei ihre Schrägstellung gegensinnig zur Schrägstellung der Feineinschnitte 3 gewählt ist.

Breite Quernuten 6, die zumindest bis zu den Laufflächenrändern verlaufen, geben den beiden Seitenbereichen II des Laufflächenprofiles eine Blockstruktur. Jede Quernut 6 weist zwei Abschnitte 6a, 6b auf, die einen stumpfen Winkel miteinander einschließen, wobei der Abschnitt 6a wesentlich länger ausgeführt ist als der Abschnitt 6b und im wesentlichen in Querrichtung verläuft bzw. bis zu einem Winkel von 30° von dieser abweicht. Beim kurzen Abschnitt 6b ist die Anordnung in Zusammenhang mit den Feineinschnitten 4 so getroffen, daß diese in Verlängerung der Quernutseitenwände des Abschnittes 6b verlaufen. Die Quernuten 6 enden laufflächeninnenseitig somit ohne, wie es bei herkömmlichen Profilausgestaltungen üblich ist, in eine Umfangsnut einzumünden. Zur Vergleichmäßigung des Abriebes ist es hiebei günstig, die Stirnwand etwa rechtwinkelig zu den Seitenkanten anzuordnen. Erwähnt sei weiters, daß, je nach Anordnung, sowohl die Feineinschnittabschnitte 5a als auch die Feineinschnitte 4 teilweise auch in die Seitenbereiche II hinein verlaufen. Die Feineinschnittabschnitte 5a sind Abschnitte von Feineinschnitten 5, die zwischen benachbarten Quernuten 6 zu den Laufflächenrändern durchgehend verlaufen. Bevorzugt wird ihre Anordnung in Übereinstimmung mit dem Verlauf der Feineinschnitte 4 und der Quernuten 6 getroffen.

Das Ausführungsbeispiel gemäß den Fig. 2 und 3 unterscheidet sich vom Ausführungsbeispiel gemäß Fig. 1 insbesondere dadurch, daß sowohl für die Quernutabschnitte 6'a als auch für die Feineinschnitte 3' und die Feineinschnittabschnitte 5'b eine Zickzackform gewählt ist. Hiebei bestehen die im Mittelband 1' verlaufenden Feineinschnitte 3' aus jeweils drei Abschnitten, von welchen jeweils die in die Umfangsnuten 2' einmündenden Abschnitte 3'a parallel bzw. im wesentlichen parallel zueinander verlaufen und die Neigung der Feineinschnitte 3' relativ zur Äquatorlinie (Winkel α ) bestimmen. Der Zickzackverlauf der Feineinschnittabschnitte 5'b ist dem Zickzackverlauf der Quernuten 6' angeglichen.

Die Breite der Quernuten 6, 6' beträgt ca. 8 mm, die Breite der Feineinschnitte max. 1,5 mm. Die Tiefe der Feineinschnitte 3, 3', 4, 4' und 5, 5' kann der übrigen Profiltiefe, die bei einem LKW-Reifen ca. 20 mm beträgt, entsprechen. Vor allem in den Feineinschnitten 5, 5' können sogenannte Grundanhebungen vorgesehen sein, so daß bei fortschreitendem Abrieb der Lauffläche größere zusammenhängende Laufflächenbereiche entstehen, die sich auf die Gesamtstabilität des Profiles günstig auswirken können. In diesem Zusammenhang ist es beispielsweise auch von Vorteil, wenn auch im Mittelband 1, 1' beispielsweise jeder zweite Feineinschnitt 3, 3' von einer geringeren Tiefe ausgeführt wird als die anderen Feineinschnitte 3, 3'. Zwischen benachbarten Quernuten 6, 6' verläuft zumindest ein Feineinschnitt 5, 5'. Wie dargestellt, ist es jedoch vorteilhaft, wenn zwischen den Quernuten 6, 6' zumindest zwei Feineinschnitte 5, 5' vorgesehen werden, deren Abstand voneinander und zu den Quernuten 6, 6' in einem Bereich von 12 bis 20 mm, insbesondere von 14 bis 18 mm gewählt wird.

## Patentansprüche

1. Ganzjahres-Radialreifen für LKW-Antriebsachsen mit einer Lauffläche, die ein entlang des Reifenäquators verlaufendes durch Umfangsnuten begrenztes Mittelband und breite, eine Blockstruktur erzeugende Quernuten in den Laufflächenseitenbereichen aufweist, wobei die Quernuten in die Laufflächenränder münden und in einem Scheitelbereich, neben den das Mittelband begrenzenden Umfangsnuten eine Vielzahl von in Querrichtung parallel bzw. im wesentlichen parallel zueinander verlaufenden Feineinschnitten vorgesehen ist, dadurch gekennzeichnet, daß der Scheitelbereich (I) eine Breite von mindestens 30 % und höchstens 50 % der Laufflächenbreite (B) aufweist und neben den das Mittelband (1, 1') begrenzenden Umfangsnuten (2, 2') nur Feineinschnitte (3, 3', 4, 4') aufweist, wobei Feineinschnitte (5, 5') aus dem Scheitelbereich (I) die Seitenbereiche (II) bis zu den Laufflächenrändern durchqueren und die im Scheitelbereich (I) außerhalb des Mittelbandes (1, 1') verlaufenden Feineinschnitte bzw. Feineinschnittsabschnitte (4, 4', 5, 5') gegensinnig zu den Feineinschnitten (3, 3') im Mittelband (1, 1') geneigt sind, und daß die in den beiden Seitenbereichen verlaufenden Quernuten (6, 6') laufflächeninnenseitig nicht in die Umfangsnuten (2, 2') einmünden.

2. Radialreifen nach Anspruch 1, dadurch gekennzeichnet, daß der Fahrflächenanteil im Scheitelbereich (I) mindestens 80 %, vorzugsweise mindestens 90 %, beträgt.

3. Radialreifen nach Anspruch 1, dadurch gekennzeichnet, daß im Mittelband (1, 1') durchgehende Feineinschnitte (3, 3') angeordnet sind.

4. Radialreifen nach Anspruch 1 oder 3, dadurch gekennzeichnet, daß die das Mittelband (1, 1) begrenzenden Umfangsnuten (2, 2') als gerade in Umfangsrichtung verlaufende Umfangsnuten ausgebildet sind, deren Breite maximal 4 mm beträgt.

5. Radialreifen nach einem der Ansprüche 1 bis 4, dadurch gekennzeichnet, daß der Abstand zwischen benachbarten Feineinschnitten (3, 3', 4, 4', 5, 5') 12 bis 20 mm, vorzugsweise 14 bis 18 mm, beträgt.

6. Radialreifen nach einem der Ansprüche 1 bis 5, dadurch gekennzeichnet, daß die das Mittelband (1, 1') durchsetzenden Feineinschnitte (3, 3') zur Äquatorlinie des Reifens unter einem Winkel (α) von 45 bis 85° geneigt sind.

7. Radialreifen nach einem der Ansprüche 1 bis 6, dadurch gekennzeichnet, daß die im Scheitelbereich (1) außerhalb des Mittelbandes (1, 1') verlaufenden Feineinschnitte (4, 4', 5, 5') unter einem Winkel (β), der 30 bis 85° beträgt, geneigt sind.

8. Radialreifen nach einem der Ansprüche 1 bis 7, dadurch gekennzeichnet, daß einige der Feineinschnitte (4, 4') in Verlängerung der Quernutkanten verlaufen.

9. Radialreifen nach einem der Ansprüche 1 bis 6, dadurch gekennzeichnet, daß die im Mittelband (1) verlaufenden Feineinschnitte (3) gerade gestaltet sind.

10. Radialreifen nach Anspruch 10, dadurch gekennzeichnet, daß die im Mittelband (1') verlaufenden Feineinschnitte (3') zickzackförmig gestaltet sind.

11. Radialreifen nach Anspruch 10, dadurch gekennzeichnet, daß die im Mittelband (1') verlaufenden Feineinschnitte (3') aus jeweils drei Abschnitten bestehen, von welchen jeweils die in die Umfangsnuten einmündenen Abschnitte parallel zueinander verlaufen und den Neigungwinkel (α) der Feineinschnitte (3') relativ zur Äquatorlinie bestimmen.

12. Radialreifen nach einem der Ansprüche 1 bis 11, dadurch gekennzeichnet, daß die Quernuten (6, 6') zwei Abschnitte (6a, 6b, 6'a, 6'b) aufweisen, die einen stumpfen Winkel miteinander einschließen, wobei jeweils der in den Laufflächenrand mündende Abschnitt (6a, 6'a), der bevorzugt länger ausgeführt ist als der zweite Abschnitt (6b, 6'b), im wesentlichen in Querrichtung verläuft bzw. bis zu einem Winkel von 30° von dieser abweicht.

13. Radialreifen nach einem der Ansprüche 1 bis 12, dadurch gekennzeichnet, daß die in die Laufflächenränder mündenden Abschnitte (6'a) der Quernuten (6') zickzackförmig gestaltet sind und die die Seitenbereiche (II) durchquerenden Feineinschnitte (5, 5') gemäß der Zickzackform der Quernuten (6') ausgebildet sind.

14. Radialreifen nach einem der Ansprüche 1 bis 13, dadurch gekennzeichnet, daß zwischen benachbarten Quernuten (6, 6') zumindest zwei Feineinschnitte (5, 5') verlaufen.

15. Radialreifen nach einem der Ansprüche 1 bis 14, dadurch gekennzeichnet, daß die Breite der Feineinschnitte (3, 3', 4, 4', 5, 5') ≦ 1,5 mm beträgt.

## Claims

1. All-weather radial tyre for HGV drive shafts, having a tread surface which comprises a central strip, which extends along the centre of the tyre and is defined by circumferential grooves, and wide transverse grooves in the lateral regions of the tread surface, such grooves producing a block structure, wherein the transverse grooves terminate in the tread surface edges, and a plurality of fine incisions are provided in a junction region, adjacent the circumferential grooves defining the central strip, such fine incisions extending parallel, or substantially parallel, relative to one another when viewed with respect to the transverse direction, characterised in that the junction region (I) has a width of at least 30 % and at most 50 % of the tread surface width (B) and only has fine incisions (3, 3', 4, 4') adjacent the circumferential grooves (2, 2') defining the central strip (1, 1'), wherein fine incisions (5, 5') traverse the lateral regions (II) from the junction region (I) to the tread surface edges, and the fine incisions or fine incision portions (4, 4', 5, 5'), which extend in the junction region (I) externally of the central strip (1, 1'), are inclined in opposite directions relative to the fine incisions (3, 3') in the central strip (1, 1'), and in that the transverse grooves (6, 6'), which extend in the two lateral regions, do not terminate in the circumferential grooves (2, 2') on the inside of the tread surface.

2. Radial tyre according to claim 1, characterised in that the travel surface portion in the junction region (I) is at least 80 %, preferably at least 90 %.

3. Radial tyre according to claim 1, characterised in that continuous fine incisions (3, 3') are disposed in the central strip (1, 1').

4. Radial tyre according to claim 1 or 3, characterised in that the circumferential grooves (2, 2'), which define the central strip (1, 1'), are in the form of rectilinear circumferential grooves which extend in the circumferential direction and the maximum width of which is 4 mm.

5. Radial tyre according to one of claims 1 to 4, characterised in that the spacing between adjacent fine incisions (3, 3', 4, 4', 5, 5') is 12 to 20 mm, preferably 14 to 18 mm.

6. Radial tyre according to one of claims 1 to 5, characterised in that the fine incisions (3, 3'), traversing the central strip (1, 1'), are inclined at an angle (α) of 45 to 85° relative to the centre line of the tyre.

7. Radial tyre according to one of claims 1 to 6, characterised in that the fine incisions (4, 4', 5, 5'), which extend in the junction region (I) externally of the central strip (1, 1'), are inclined at an angle (β), which is 30 to 85°.

8. Radial tyre according to one of claims 1 to 7, characterised in that some of the fine incisions (4, 4') extend as an extension of the transverse groove edges.

9. Radial tyre according to one of claims 1 to 6, characterised in that the fine incisions (3), which extend in the central strip (1), have a rectilinear configuration.

10. Radial tyre according to claim 10, characterised in that the fine incisions (3'), which extend in the central strip (1'), have a zig-zag-shaped configuration.

11. Radial tyre according to claim 10, characterised in that the fine incisions (3'), which extend in the central strip (1'), each comprise three portions, of which the portions terminating in the circumferential grooves extend parallel to each other and determine the angle of inclination (α) of the fine incisions (3') relative to the centre line.

12. Radial tyre according to one of claims 1 to 11, characterised in that the transverse grooves (6, 6') have two portions (6a, 6b, 6'a, 6'b), which form an obtuse angle with each other, the first portion (6a, 6'a), which terminates in the tread surface edge and is preferably longer than the second portion (6b, 6'b), extending substantially in the transverse direction or deviating from such direction by an angle of up to 30°.

13. Radial tyre according to one of claims 1 to 12, characterised in that the portions (6'a) of the transverse grooves (6'), which terminate in the tread surface edges, have a zig-zag-shaped configuration, and the fine incisions (5, 5'), which traverse the lateral regions (II), are configured in accordance with the zig-zag shape of the transverse grooves (6').

14. Radial tyre according to one of claims 1 to 13, characterised in that at least two fine incisions (5, 5') extend between adjacent transverse grooves (6, 6').

15. Radial tyre according to one of claims 1 to 14, characterised in that the width of the fine incisions (3, 3', 4, 4', 5, 5') is ≦ 1.5 mm.

## Revendications

1. Bandage pneumatique toutes saisons pour essieux moteurs de camions, comprenant une surface de roulement qui comporte une bande centrale limitée par des rainures périphériques et s'étendant le long de l'équateur du bandage et de larges rainures transversales constituant une structure à blocs dans les régions latérales de la surface de roulement, les rainures transversales débouchant dans les bords de la surface de roulement alors qu'il est prévu dans une région de sommet, en dehors des rainures périphériques limitant la bande centrale, une multiplicité de fines entailles s'étendant parallèlement ou sensiblement parallèlement en direction transversale, caractérisé en ce que la région de sommet (I) a une largeur d'au minimum 30% et d'au maximum 50% de la largeur (B) de la surface de roulement et ne comprend en dehors des rainures périphériques (2, 2') qui limitent la bande centrale (1, 1') que de fines entailles (3, 3', 4, 4'), de fines entailles (5, 5') partant de la région de sommet (I) traversant les régions latérales (II) jusqu'aux bords de la surface de roulement, et les fines entailles ou les sections de fines entailles (4, 4', 5, 5') qui s'étendent dans la région de sommet (I) en dehors de la bande centrale (1, 1') étant inclinées en sens contraire aux fines entailles (3, 3') de la bande centrale (1, 1'), et en ce que les rainures transversales (6, 6') qui s'étendent dans les deux régions latérales ne débouchent pas dans les rainures périphériques (2, 2') à l'intérieur de la surface de roulement.

2. Bandage pneumatique radial selon la revendication 1, caractérisé en ce que la fraction de la surface de roulement est d'au moins 80% et de préférence d'au moins 90% dans la région de sommet (I).

3. Bandage pneumatique radial selon la revendication 1, caractérisé en ce que de fines entailles continues (3, 3') sont prévues dans la bande centrale (1, 1').

4. Bandage pneumatique radial selon la revendication 1 ou 3, caractérisé en ce que les rainures périphériques (2, 2') qui limitent la bande centrale (1, 1') sont constituées par des rainures périphériques rectilignes orientées en direction périphérique, dont la largeur est au maximum de 4 mm.

5. Bandage pneumatique radial selon l'une quelconque des revendications 1 à 4, caractérisé en ce que la distance entre deux fines entailles voisines (3, 3', 4, 4', 5, 5') est comprise entre 12 et 20 mm, et de préférence entre 14 et 18 mm.

6. Bandage pneumatique radial selon l'une quelconque des revendications 1 à 5, caractérisé en ce que les fines entailles (3, 3') qui traversent la bande centrale (1, 1') sont inclinées par rapport à la ligne équatoriale du bandage sous un angle (α) compris entre 45 et 85°.

7. Bandage pneumatique radial selon l'une quelconque des revendications 1 à 6, caractérisé en ce que les fines entailles (4, 4', 5, 5') qui s'étendent dans la région de sommet (1) en dehors de la bande centrale (1, 1') sont inclinées sous un angle (β) compris entre 30 et 85°.

8. Bandage pneumatique radial selon l'une quelconque des revendications 1 à 7, caractérisé en ce que certaines des fines entailles (4, 4') s'étendent dans le prolongement des rainures transversales.

9. Bandage pneumatique radial selon l'une quelconque des revendications 1 à 6, caractérisé en ce que les fines entailles (3) qui s'étendent dans la bande centrale (1) sont rectilignes.

10. Bandage pneumatique radial selon la revendication 9, caractérisé en ce que les fines entailles (3') qui s'étendent dans la bande centrale (1') sont en zigzag.

11. Bandage pneumatique radial selon la revendication 10, caractérisé en ce que les fines entailles (3') qui s'étendent dans la bande centrale (1') sont constituées respectivement par trois sections, les sections qui débouchent dans les rainures périphériques étant parallèles entre elles en déterminant l'angle d'inclinaison (α) des fines entailles (3') par rapport à la ligne équatoriale.

12. Bandage pneumatique radial selon l'une quelconque des revendications 1 à 11, caractérisé en ce que les rainures transversales (6, 6') comprennent deux sections (6a, 6b, 6'a, 6'b) qui forment entre elles un angle obtus, chaque section (6a, 6'a) qui débouche sur le bord de la surface de roulement et qui est de préférence plus longue que la seconde section (6b, 6'b) étant orientée sensiblement en direction transversale ou inclinée en déviant de celle-ci d'un angle pouvant atteindre 30°.

13. Bandage pneumatique radial selon l'une quelconque des revendications 1 à 12, caractérisé en ce que les sections (6'a) des rainures transversales (6') qui débouchent sur les bords de la surface de roulement ont une forme en zigzag et les fines entailles (5, 5') qui traversent les régions latérales (II) sont constituées selon la forme en zigzag des rainures transversales (6').

14. Bandage pneumatique radial selon l'une quelconque des revendications 1 à 13, caractérisé en ce qu'au moins deux fines entailles (5, 5') s'étendent entre deux rainures transversales voisines (6, 6').

15. Bandage pneumatique radial selon l'une quelconque des revendications 1 à 14, caractérisé en ce que la largeur de toutes les fines entailles (3, 3', 4, 4', 5, 5') est ≦ 5 mm.
